# EUROPÄISCHE PATENTSCHRIFT

(11) **EP 0 368 106 B1**
(45) Veröffentlichungstag und Bekanntmachung des Hinweises auf die Patenterteilung: **16.06.1993**
(21) Anmeldenummer: 89120058.6
(22) Anmeldetag: 28.10.1989
(51) Int. Cl.: B41F 13/20, B41F 13/26, F16C 13/02

(54) **Einrichtung zum Ankuppeln der Achszapfen einer Walze oder eines Zylinders einer Druckmaschine an Wellenabschnitte**
Device for joining axial bearings to a section of the shaft of a roller or a cylinder of a printing press
Dispositif à coupler les paliers axiaux à la section d'un axe d'un rouleau ou d'un cylindre d'une imprimerie

(30) Priorität: 05.11.1988 DE 3837625
(43) Veröffentlichungstag der Anmeldung: 16.05.1990
(73) Patentinhaber: M.A.N.-ROLAND Druckmaschinen Aktiengesellschaft, 63012 Offenbach (DE)
(72) Erfinder: John, Thomas, D-8900 Augsburg 22 (DE)

(56) Entgegenhaltungen:
- WO-A-86/01266
- FR-A- 2 407 332
- US-A- 4 632 575

## Beschreibung

Die Erfindung betrifft eine Einrichtung zum Ankuppeln der runden Achszapfen eines Zylinders einer Druckmaschine an Wellenabschnitte, die in den Seitenwänden der Druckmaschine gelagert sind, mit zwei entlang Teilungsflächen voneinander getrennten Halbschalen, zwischen deren kreisabschnittsförmigen Klemmflächen je ein Achszapfen einklemmbar ist und von denen die eine Halbschale abnehmbar, während die andere Halbschale fest mit dem Wellenabschnitt verbunden ist.

Bei einer derartigen an Druckmaschinen des Typs "FLEXOMAN" (eingetragenes Warenzeichen) ausgeführten Einrichtung verlaufen die Teilungsflächen in radialer Richtung. Um den zwischen den Halbschalen geklemmten Zylinder aus der Druckmaschine entnehmen zu können, ist zwischen jedem zu klemmenden Achszapfen und dem Zylindermantel je ein zylindrischer Ansatz vorgesehen, dessen Durchmesser größer als der Achszapfendurchmesser ist. Unter die beiden zylindrischen Ansätze wird dann je eine Ausrollschiene geschoben, auf die nach Abnahme der lösbaren Halbschale und geeigneter Einstellung der festen Halbschale der Zylinder aus dem Druckwerk herausgerollt wird.

Nachteilig ist hierbei, daß die beiden zylindrischen Ansätze Bauraum in Längsrichtung des Zylinders zwischen den Seitenwänden der Druckmaschine benötigen.

Der Erfindng liegt die Aufgabe zugrunde, eine gattungsgemäße Einrichtung so weiterzubilden, daß der zum Ausbau erforderliche Abstand zwischen den Seitenwänden verringert wird.

Diese Aufgabe wird gemäß der Erfindung durch Anwendung des Merkmals des Kennzeichens des Anspruchs 1 gelöst.

Ein Ausführungsbeispiel der Erfindung ist anhand der Zeichnung beschrieben. Auf dieser zeigt
- Fig. 1: eine teilweise aufgebrochene Seitenansicht der erfindungsgemäßen Einrichtung und
- Fig. 2: eine Ansicht in Richtung der Pfeile II-II.

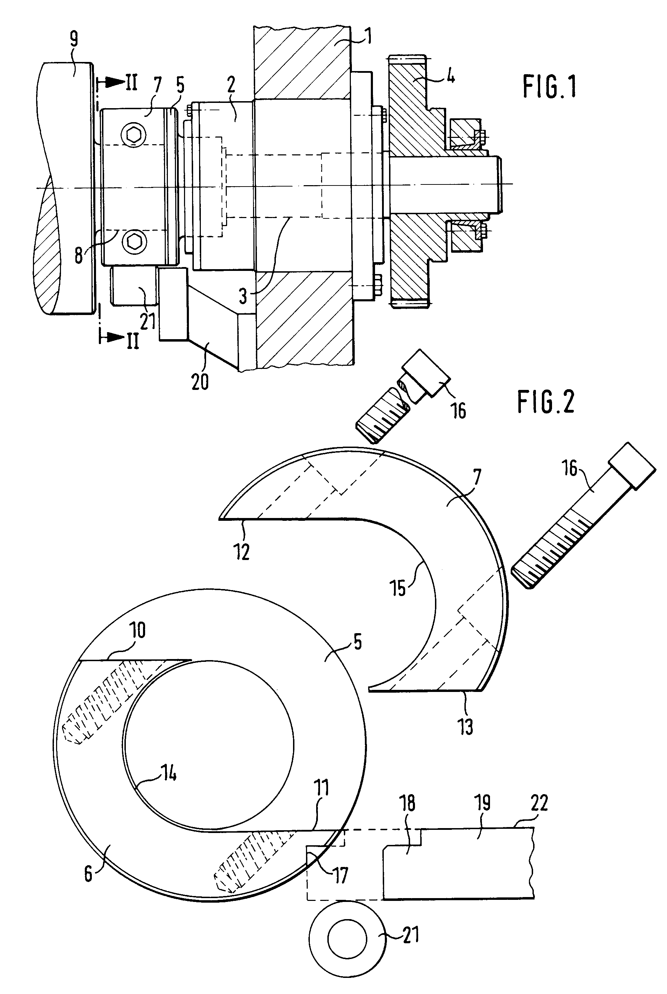

Wie Fig. 1 zeigt, ist in einer Seitenwand 1 der Druckmaschine eine Buchse 2 fest angeordnet, in der ein Wellenabschnitt 3 drehbar gelagert ist. Auf den Wellenabschnitt 3 ist außerhalb der Seitenwand 1 ein Antriebszahnrad 4 fest aufgesetzt. Das innerhalb der Seitenwand befindliche Ende des Wellenabschnittes 3 läuft in einem Flansch 5 aus. Fest mit dem Flansch 5 ist eine Halbschale 6 verbunden, die zusammen mit einer abnehmbaren Halbschale 7 zur Klemmung eines Achszapfens 8 einer Walze 9 oder eines Zylinders 9 dient. Der Zylinder 9 kann beispielsweise eine Rasterwalze, ein Farbauftragzylinder oder ein Formzylinder sein.

Jede der beiden Halbschalen 6, 7 weist zwei ebene Tellungsflächen 10, 11 bzw. 12, 13 auf. Zwischen den Teilungsflächen 10, 11 der Halbschale 6 erstreckt sich eine kreisabschnittsförmige Klemmfläche 14. In gleicher Weise weist die Halbschale 7 eine Klemmfläche 15 zwischen den beiden Teilungsflächen 12, 13 auf. Die Teilungsfläche 11 der festen Halbschale 6 verläuft tangential zur Klemmfläche 15. Dementsprechend verläuft auch die Teilungsfläche 13 tangential zu dieser Klemmfläche. Beim dargestellten Ausführungsbeispiel verlaufen auch die Teilungsfläche 12 und damit die Teilungsfläche 10 tangential zur Klemmfläche 15. Dies ist allerdings nicht zwingend erforderlich. Wie abnehmbare Halbschale 7 ist mittels Schrauben 16 an der festen Halbschale 6 befestigbar.

An der Halbschale 6 ist weiterhin, unterhalb des äußeren Endes der Teilungsfläche 11 ein abgestufter Positionieranschlag 17 vorgesehen. An den Positionieranschlag 17 kann das entsprechend abgestufte Ende 18 einer Ausrollschiene 19 angestellt werden. Die Ausrollschiene 19 kann hierzu auf mindestens einem mittels eines Stützarmes 20 an der Seitenwand 1 befestigten Führungsmittel 21 etwa waagerecht bewegt werden. Das Führungsmittel 21 ist zweckmäßig als Rolle ausgebildet. Es könnte jedoch auch als Schiene ausgeführt sein.

Gleichartige Halbschalen 6, 7 sind auch an dem in der Zeichnung nicht dargestellten, in der anderen Seitenwand gelagerten, mit dem Wellenabschnitt 3 fluchtenden zweiten Wellenabschnitt vorgesehen. An der zweiten Seitenwand sind darüberhinaus ebenfalls Führungsmittel für eine zweite Ausrollschiene vorhanden.

Zur Entnahme des Zylinders 9 wird dieser so weit gedreht, bis die Teilungsflächen 11 der Halbschalen 6 an beiden Enden waagerecht verlaufen. Dann werden die Schrauben 16 gelöst und die Halbschalen 7 abgenommen. Nunmehr kann der Zylinder entnommen werden. Diese Entnahme wird dadurch erleichtert, daß an Positionieranschläge 17 anstellbare Ausrollschienen 19 vorgesehen sind. Die Ausrollschienen 19 werden gegen die Halbschalen 7 bewegt, bis deren Enden 18 an den Positionieranschlägen 17 anliegen. Dabei fluchten die Oberseiten 22 der Ausrollschienen 19 mit den Teilungsflächen 11. Der Zylinder 9 kann nunmehr auf den Ausrollschienen 19 aus dem Druckwerk herausgerollt werden.

## Patentansprüche

1. Einrichtung zum Ankuppeln der runden Achszapfen eines ausbaubaren Zylinders einer Druckmaschine an zwei fluchtende Wellenabschnitte, die in den Seitenwänden der Druckmaschine gelagert sind,
mit zwei entlang Teilungsflächen voneinander getrennten Halbschalen, zwischen deren kreisabschnittsförmigen Klemmflächen je ein Achszapfen einklemmbar ist
und von denen die eine Halbschale abnehmbar und die andere Halbschale fest mit dem Wellenabschnitt verbunden ist,
dadurch gekennzeichnet, daß
eine der Teilungsflächen (11) der festen Halbschale (6) tangential zur Klemmfläche (14) verläuft.

2. Einrichtung nach Anspruch 1, dadurch gekennzeichnet, daß
die feste Halbschale (6) unterhalb des äußeren Endes der tangential zur zur Klemmfläche (14) verlaufenden Teilungsfläche (11) einen Positionieranschlag (17) aufweist,
an den Positionieranschlag (17) eine Ausrollschiene (19) anstellbar ist,
die auf einem fest an der Druckmaschine angeordneten Führungsmittel (21) verschiebbar ist, und
daß die Oberseite (22) der angestellten Ausrollschiene (19) mit der Teilungsfläche (11) fluchtet.

## Claims

1. Device for coupling the round axle journal of a detachable cylinder of a printing machine to two aligned shaft sections mounted in the side walls of the printing machine,
having two half shells spaced apart along dividing planes, between whose part-circular clamping surfaces an axle journal can respectively be clamped
and of which one half shell is removable and the other half shell is firmly connected to the shaft section,
characterised in that
one of the dividing planes (11) of the fixed half shell (6) extends tangentially to the clamping surface (14).

2. Device according to claim 1, characterised in that
the fixed half shell (6) has a positioning stop (17) below the outer end of the dividing plane (11) extending tangentially to the clamping surface (14),
against the positioning stop (17) a roll-out bar (19) can be set
which can be moved on a guide means (21) fixedly arranged on the printing machine, and
in that the upper side (22) of the set roll-out bar (19) is in alignment with the dividing plane (11).

## Revendications

1. Dispositif pour accoupler les tourillons ronds d'un cylindre démontable d'une presse à imprimer à deux segments d'arbres alignés qui tourillonnent dans les bâtis latéraux de la presse à imprimer,
comprenant deux demi-coquilles séparées l'une de l'autre le long de surfaces de joint, entre les surfaces de serrage, en forme d'arc de cercle, desquelles on peut serrer un tourillon,
et dont une demi-coquille est amovible tandis que l'autre est rigidement solidaire du segment d'arbre,
caractérisé
en ce qu'une (11) des surfaces de joint de la demi-coquille fixe (6) s'étend tangentiellement à la surface de serrage (14).

2. Dispositif selon la revendication 1, caractérisé en ce que la demi-coquille fixe (6) présente une butée de positionnement (17) au-dessous de l'extrémité extérieure de la surface de joint (11) qui s'étend tangentiellement à la surface de serrage (14),
une barre de roulement (19) peut être mise en appui contre la butée de positionnement (17),
cette barre peut être déplacée en translation sur un organe de guidage (21) rigidement fixé à la presse à imprimer, et
en ce que la face supérieure (22) de la barre de roulement (19) mise en appui est dans le même plan que la surface de joint.
